# EUROPEAN PATENT SPECIFICATION

(11) **EP 0 328 630 B1**
(45) Date of publication and mention of the grant of the patent: **12.07.1995**
(21) Application number: 88908088.3
(22) Date of filing: 09.08.1988
(51) Int. Cl.: C09K 21/00, C08K 3/10, B27N 9/00, B32B 9/00, B32B 25/00, B32B 25/14

(54) **POLISHABLE, FLAME RETARDED, SYNTHETIC MINERAL PRODUCT AND METHOD**
POLIERBARES FLAMMVERZÖGERNDES KUNSTMINERALERZEUGNIS SOWIE VERFAHREN
PRODUIT MINERAL SYNTHETIQUE, IGNIFUGE, POLISSABLE, ET PROCEDE

(30) Priority: 10.08.1987 US 83716
(43) Date of publication of application: 23.08.1989
(73) Proprietor: AVONITE, INC., Belen, New Mexico 87002 (US)
(72) Inventor: ROSS, Gilbert, Sylmar, CA 91342 (US); RISLEY, Lonnie, Sylmar, CA 91342 (US)
(74) Representative: Patentanwälte Zellentin & Partner
(86) International application number: US8802738
(87) International publication number: WO8901504

(56) References cited:
- EP-A- 0 069 217
- GB-A- 1 391 926
- US-A- 3 663 493
- US-A- 3 827 933
- US-A- 4 076 540
- US-A- 4 085 246
- US-A- 4 159 301
- US-A- 4 433 070
- DATABASE WPIL, accession no. 84-078988 [13], Derwent Publications Ltd, London,GB; & JP-A-59 031 134 (NIPPON GAKKI SEIZO K.K.) 20-02-1984

## Description

### Technical Field

This invention relates to self-supporting products of manufacture, particularly of the mineral appearing type, such as synthetic granite, onyx and marble. Self-supporting manufactured articles having synthetic mineral appearance find widespread application in the architectural field, as wall panels, counters, tables, tubs and vanities. In interior uses, flame resistance is a desired and often required attribute. Accordingly, the present compositions are flame retarded to industry standards, but unlike previously known flame retarded synthetic mineral articles, the present products are highly polishable, despite the inclusion of flame retarding particulate.

### Background

Synthetic mineral compositions are well known. USP 4,433,070 to Ross and Stevens first disclosed such compositions having the advantage of polishability by virtue of using a resinous fill in a resin matrix of like hardness, rather than the then common inorganic fillers which were difficult to distribute properly and adversely affected polishing qualities. Other patents have disclosed conventional systems of acrylic resin with various fillers as to Miller, and patents therein described, and USP 4,085,246 and USP 4,15g,301 both to Buser et al which disclose in addition to acrylic resin matrices a variety of other polymers, including polyesters, which are filled with a blend of microscopic fillers and macroscopic translucent or transparent particles for an asserted granite effect. GB-A 1,391,926 discloses the production of shaped articles from linear polyester in which additives like dyes and pigments are incorporated by first forming a melt shape concentrate and dissolving said concentrate in the moulded base material prior to shaping. EP-A 0 069 217 discloses the use of prepegs of unsaturated polyester resins and oxides or hydroxides of Ca, Mg, Ba, Al and their mixtures as curing agents to be mixed, with the base polyester, especially containing isophthalic acid, prior to the heat curing thereof. Said products are neither flame retardant nor mineral appearing. GB-A 1,174,952 to Majnoni disclosed buttons formed of polyester matrix and polyester scrap solids to produce what can be described as a variegated effect. In Japanese Applications SHO 57[1982] 140844 a resin coat layer containing a hardened resin/glass or aluminum hydroxide mixture broken up into particles in another unhardened, solidified resin matrix is taught. Panels, counters and like self-supporting polishable structures and flame retarding are not taught in the Japanese application. Other patents in the field include those to Duggins: USP 3,827,933 and 3,847,865 which teach filled acrylic polymers particularly, and containing alumina trihydrate. In the Duggins patents it is pointed out that the use of alumina trihydrate filler as a flame retardant in polyester resins was taught in a Connolly and Thornton article in Modern Plastics 43.154 (1965).

Neglected in the development of the art has been the combining of flame retardancy with polishability. Hitherto disclosed compositions have had either the polishability of the Ross and Stevens product, or the flame retardancy of the acrylic products, but not both in one product.

### Summary of the Invention

It is accordingly an object of the present invention to provide a self-supporting synthetic mineral product having both polishability and flame retardancy. Another object is to make invisible the presence of alumina trihydrate because its optical effect is aesthetically undesirable in many synthetic mineral compositions.

In accordance with the invention, these and other objects are realised in compositions and articles in which the resin modifier, such as a flame retarding particulate like alumina trihydrate, is embedded in a previously hardened resin like the matrix resin before addition thereto, so that e.g. the polishability or other desired, but normally adversely affected, quality perdures in the product, the embeddinq resin beinq like to the matrix resin in the desired quality, so that the normally adversive surface or optical effect of the additive is masked, but the desirably contributed attribute, such as flame retardancy nonetheless made available.

In its particular aspects, the invention provides a polishable, flame retarded, synthetic mineral self-supporting product comprising a resin matrix, a particulate resinous filler distributed therein in a manner simulative of natural mineral markings, the matrix and filler having like polishing characteristics for a uniform gloss after polishing; and a flame retardant in a flame retarding effective amount, the flame retardant being harder and of different polishing characteristics than the matrix and normally tending to interfere with surface polishing to uniform gloss of the product, characterised in that flame different polishing characteristics than the matrix and normally tending to interfere with surface polishing to uniform gloss of the product, characterized in that flame retardant is encased within the filler particles in a manner blocking surface exposure of the flame retardant, whereby the product surface is polishable to a uniform gloss.

In this and like embodiments: the resin matrix comprises a synthetic organic polymer; the resinous filler comprises a synthetic organic polymer; the flame retardant comprises a material, e.g. an inorganic compound, such as alumina trihydrate less combustible than the resinous matrix; the product comprises from 20 to 90 weight per cent resin matrix; the product comprises from 80 to 10 weight per cent resinous filler; the filler comprises up to 80 per cent by volume flame retardant; the product comprises from 45 to 70 weight per cent resin matrix, from 30 to 55 weight per cent resinous filler comprising from 30 to 70 per cent by volume flame retardant; the matrix comprises polyester resin or an acrylic polymer; and/or, the resinous filler comprises polyester resin or acrylic polymer.

In another embodiment the invention provides a polishable, flame retarded, hard surface architectural article, such as a decorative or functional hard surface or covering for walls, tables, countertops and bars, comprising a synthetic organic resin matrix and a flame retarding effective amount of flame retardant particles, the particles having a resinous casing separately formed outside of the matrix against exposure of the particles within the matrix, the resinous casing having like polishing characteristics to the matrix, whereby the article has a uniformly polishable surface.

Preferably, the article comprises from 45 to 70 weight per cent synthetic organic resin matrix, and sufficient resinous filler to completely encase the flame retardant, e.g. from 30 to 55 weight per cent resinous filler comprising from 30 to 70 per cent by volume flame retardant; the flame retardant is inorganic; the matrix comprises polyester resin or an acrylic polymer; the resinous particulate filler comprises polyester resin or an acrylic polymer; and the inorganic flame retardant comprises alumina trihydrate.

The invention provides a method of selectively modifying the properties of a composition comprising a synthetic organic polymer matrix, including combining said polymer matrix and a property modifying effective amount of a modifying agent durably encased in a synthetic organic polymer having those properties of said matrix which it is desired to not modify with said modifying agent and no properties interfering with desired property modification by said modifying agent.

### Detailed Description

The present invention uses a polymeric coating on the flame retardant or other additive to ensure that at the surface of the final article made from the composition, the desired properties available from the polymer matrix and filler if any are also available where the additive may be at the surface. The filler resin is most conveniently used, and the additive encased in the filler resin added as or in lieu of filler.

The resins and polymers used in the invention are all well known per se, see for example the descriptions of resins and polymers in the patents cited above, the disclosures of which are incorporated herein by this reference, to avoid unduly lengthening the present specification by describing these well known materials. Broadly, useful matrix and filler resins and polymers are those synthetic organic polymeric materials which in the case of the matrix resins and polymers can be extruded, hot melt distributed, cast or poured per se or in solution to subsequently solidify by freezing or evaporation of solvent.

In the case of additive-free filler polymers the matrix polymers can be used broken up or ground to the desired size, e.g. 25 to 600 and up 750 microns and more average particle size, or particulates made from these and like resins directly can be used. For purposes of the present invention the properties of interest in the finished article, such as uniform polishability, must be kept in mind in making the resin and polymer selections, and selections of polymers for matrix and filler having similar or identical values in the desired property will be most satisfactory. Where the critical properties do not require such values in the matrix and filler materials, the range of choice of polymer material can be broadened.

Preferred polymers are the polyesters, a class of resinous materials which broadly are derived from glycols and unsaturated acids or anhydrides, e.g. maleic anhydride or phthalic anhydride and propylene glycol, and dissolved in styrene or methyl methacrylate. Also preferred are acrylic polymers, particularly polymethyl methacrylate and in a methyl methyacrylate solvent.

The nonadversive introduction of an additive such as a flame retardant into the above polymer compositions in the main desideratum of the present invention. Flame retardancy is accomplished best by incorporating an additive which releases water or directly a gas that inhibits propagation of flame, e.g. CO₂, but may be accomplished passively by reducing the combustability of the architectural articles. This latter effect is realized by inclusion of any material which is less combustible that the polymer it replaces, and thus glass, carbon, graphite, phenolics, silicas, clays, and all naturally occuring minerals less combustible than the organic polymers of the compositions may be used as the additive to be flame retardants herein. Alumina trihydrate has been recognized as a superior flame retardant for synthetic mineral simulative systems in the past and is so recognized in the present systems, for its effect of releasing its waters of hydration upon being heated which multiplies its quenching efficiency beyond mere incombustability.

Modifying agent additives, organic or inorganic, which are lower or not effective in flame retardancy are still advantageously used in the present compositions for special purposes inherent in a given material, or simply for lowering cost. Previously, the use of such materials was inhibited where polishability was an important consideration, since the nonuniformity between the additive and the matrix polymer gave rise to uneven buffing results at and near the additive particles, and an overall matte effect rather than a polished lustre. This is the result of myriad small projections of additive at the surface where the polymer has been selectively worn away by polishing and the additive has not. With the present invention however, the additive is not exposed at the surface in polishability affecting amount through the additive encasement which as described is like to the matrix and/or nonadditive filler so as to be equally or nearly equally polishable in contradistinction to the encapsulated additive modifying agent. The term "polishability" herein refers to the quality of assuming an added lustre upon buffing with or without use of lustrants and buffing aids, and "like polishability" refers to a like response to buffing, side by side, of two discrete phases in both lustre and wear, such that surface discontinuities between phases are not increased by buffing. Hard additive phases such as alumina trihydrate are quickly raised relative to the surrounding matrix by buffing as the matrix wears faster than the additive and matte not lustre effects are realized where the additive affects polishability.

In preparing the compositions of the present invention, the modifying agent containing filler particulate is first prepared by taking, for example, alumina trihydrate of very fine particle size and mixing with the filler resin, e.g. a solution of polyester resin in styrene. The alumina trihydrate and resin solution are blended together until the each individual particle of the additive is well coated. The resin is then cured. The cured resin mass is ground by any suitable means to the desired particle size of the particulate resin filler, e.g. 25 to 600 microns in average particle size. Inspection of the alumina trihydrate filled filler particles reveals that the alumina trihydrate particles are individually encased by the resin, such that the particles are from 30 to 70 per cent by volume of the individual filler particulates. The encased particles are not to be confused with dyes and pigments which are incorporated in resins, including particulate resins. The present additives added for flame retardant effects are encased by and not incorporated into the surrounding resin. The presence of a particle in the filler resin does not color the resin, but rather the filler resin masks the particle appearance, including color. This is especially desirable where the particles are alumina trihydrate flame retardant. This material has a tendency to obtrude into the achievement of optimum natural mineral effects, but in the present invention its optical effects are swallowed up in the encasing of it and what appears to the observer on looking into the depth of surface of the synthetic mineral product is only the filler particle

Once prepared the filled filler particulate is added to the matrix resin in the above stated proportions. It has been noted that the effectively increased size of the additive, through having the resin coating in forming the filler particulate, increases displacement and decreases the sink rate of the additive in the matrix resin, making blending and maintaining mineral simulative distribution of particulate uniformly in the product readily obtainable, in contrast to complex mixing schemes used in the prior art.

The matrix is then cured or otherwise allowed to harden in the usual manner.

### Examples

A simulated mineral article was prepared by adding to a vessel equipped with blending devices a mass of polyester resin in a styrene solution and alumina trihydrate in a mix of sizes from 2 to 4 microns. The mix was blended for less than one hour and until the individual component alumina trihydrate particles were each coated. The mix was poured out, allowed to cure, and then ground over a range less than 600 microns in average particle size. Inspection of specimens of the particulate will reveal a center of alumina trihydrate equalling typically about 60% by volume of the overall particulate and ranging generally in the 30 to 70% by volume range.

Forty parts of the just prepared resinous particulate with the alumina trihydrate encased therein were combined in a suitable vessel with 60 parts of the same polyester resin, per 100 parts by weight of the combination.

After stirring together to a uniform blend, the matrix and filler resin was poured out into elongated horizontal forms for cure. The combination can of course be poured into molds of desired configuration as an alternative to the making of sheets.

A sample of the cured section was cut from the remainder for evaluation. Inspection revealed that the alumina trihydrate was not visible, nor was there any yellowing of the resin characteristic of an exposed trihydrate additions. Cutting with a saw was a smooth trouble-free operation. Sanding with a finishing sander to develop a rounded edge went easily and the resulting edge was smooth, polished and free of matte-causing projections.

The product was evaluated for flame retardance and was qualified for a Class I rating.

Accordingly the above objects of providing a flame retarded product simulative of natural mineral and polishable as well has been realized.

## Claims

1. A polishable, flame retarded, self-supporting synthetic mineral product comprising a resin matrix, a particular resinous filler distributed therein in a manner simulative of natural mineral markings, and a flame retardant which is of a different hardness and polishability and less combustible than said resin matrix characterised in that said flame retardant is encased within said filler particles and the product comprising from 45 to 70 weight percent resin matrix, from 30 to 55 weight percent resinous filler comprising from 30 to 70 percent by volume flame retardant, said resin matrix and said resinous filler comprises a polyester resin or acrylic polymer, said flame retardant comprises alumina trihydrate, said resin matrix and said resinous filler having like polishing characteristics and said resinous filler having a particle size of 25-750 »m.

2. A polishable, flame retarded, self-supporting synthetic mineral product according to claim 1, characterised in that said filler particles encasing the flame retardant are separately formed outside of said matrix.

3. A polishable, flame retarded, self-supporting synthetic mineral product according to claim 1 and 2, in which an additional resinous filler free of additives is added.

4. A polishable, flame retarded, self-supporting synthetic mineral product according to claim 1, characterised by a thickness of the product of 0,6 cm or more.

## Patentansprüche

1. Polierbares, schwer entflammbares, selbsttragendes, synthetisches, mineralisches Produkt, welches eine Kunststoffmatrix, einen partikelförmigen Kunststofffüllstoff, der darin in einer Weise verteilt ist, welche natürlichen Mineralmarkierungen entspricht, und ein Flammenschutzmittel, welches von einer unterschiedlichen Härte und Polierbarkeit und weniger entflammbar ist als besagte Kunststoffmatrix, enthält, **dadurch gekennzeichnet**, daß das flammenhemmende Mittel eingeschlossen ist in besagte Füllstoffpartikel, und daß das Produkt aus von 45 bis 70 Gew.-% Kunststoffmatrix und von 30 bis 55 Gew.-% Kunststofffüller, welcher von 30 bis 70 % des Volumens flammenhemmendes Mittel enthält, besteht, wobei die Kunststoffmatrix und der besagte Kunststofffüller ein Polyesterharz oder Acrylpolymer enthalten, das flammenhemmende Mittel Aluminiumtrihydrat ist, besagte Kunststoffmatrix und besagter Kunststofffüller gleiche Poliereigenschaften besitzen und besagter Kunststofffüller eine Partikelgröße von 25 bis 750 »m besitzt.

2. Polierbares, flammenhemmendes, selbsttragendes, synthetisches, mineralisches Produkt gemäß Anspruch 1, **dadurch gekennzeichnet**, daß besagte Füllstoffpartikel, welche das flammenhemmende Mittel einschließen, getrennt außerhalb der Matrix gebildet werden.

3. Polierbares, flammenhemmendes, selbsttragendes, synthetisches, mineralisches Produkt gemäß Anspruch 1 und 2, dem ein zusätzlicher Kunststofffüller, welcher frei von Zusätzen ist, beigefügt wird.

4. Polierbares, flammenhemmendes, selbsttragendes, synthetisches, mineralisches Produkt gemäß Anspruch 1, **dadurch gekennzeichnet**, daß die Dicke des Produktes 0,6 cm oder mehr beträgt.

## Revendications

1. Un produit minéral synthétique polissable, ignifuge, autoportant, comprenant une matrice de résine, une matière de charge résineuse particulière qui est répartie dans cette dernière de manière similaire aux dessins naturels des minéraux, et une matière ignifuge, qui a une dureté et des propriétés de polissage différentes et qui est moins combustible que ladite matrice de résine, caractérisé en ce que ladite matière ignifuge est entourée desdites particules de charge et en ce que le produit comprend entre 45 et 70 % en poids de matrice de résine, entre 30 et 55 % en poids de matière de charge résineuse comprenant entre 30 et 70 % de volume de matière ignifuge, ladite matrice de résine et ladite matière de charge résineuse comprenant une résine polyester ou un polymère acrylique, ladite matière ignifuge comprenant du trihydrate d'aluminium, ladite matrice de résine et ladite matière de charge résineuse ayant des caractéristiques de polissage semblables et la taille des particules de ladite matière de charge résineuse étant de 25-750 »m.

2. Produit minéral synthétique polissable, ignifuge, autoportant selon la revendication 1, caractérisé en ce que lesdites particules de charge entourant la matière ignifuge sont formées séparément en dehors de ladite matrice.

3. Produit minéral synthétique polissable, ignifuge, autoportant selon la revendication 1 et 2, dans lequel une matière de charge supplémentaire sans additifs est ajoutée.

4. Produit minéral synthétique polissable, ignifuge, autoportant selon la revendication 1, caractérisé par une épaisseur du produit de 0.6 cm ou plus.
